# EUROPEAN PATENT SPECIFICATION

(11) **EP 0 368 955 B1**
(45) Date of publication and mention of the grant of the patent: **28.12.1994**
(21) Application number: 89905213.8
(22) Date of filing: 22.04.1989
(51) Int. Cl.: F16H 19/04, F02B 75/32

(54) **MOTION CONVERSION MECHANISM FOR USE BETWEEN ROTATING MOTIONS AND RECIPROCATING MOTIONS, AND INTERNAL COMBUSTION ENGINE USING THE SAME MECHANISM**
MECHANISMUS ZUR UMFORMUNG ZWISCHEN DREHBEWEGUNG UND HIN- UND HERGEHENDER BEWEGUNG UND VERBRENNUNGSKRAFTMASCHINE MIT DERARTIGEM MECHANISMUS
MECANISME DE CONVERSION DE MOUVEMENTS S'UTILISANT ENTRE DES MOUVEMENTS ROTATIFS ET DES MOUVEMENTS ALTERNATIFS, ET MOTEUR A COMBUSTION INTERNE METTANT EN OEUVRE LEDIT MECANISME

(30) Priority: 22.04.1988 KR 460388
(43) Date of publication of application: 23.05.1990
(73) Proprietor: PARK, Young, Keun, Seoul 121-252 (KR)
(72) Inventor: PARK, Young, Keun, Seoul 121-252 (KR)
(74) Representative: Brown, Kenneth Richard
(86) International application number: PCT/KR89/00009
(87) International publication number: WO 89/10502

(56) References cited:
- WO-A-87/01167
- DE-B- 2 619 645
- FR-A- 1 024 666
- US-A- 1 636 612

## Description

### Field of the invention

The present invention relates to a motion conversion mechanism for converting between rotating motion and reciprocating motion, and to an internal combustion engine using the same mechanism. More specifically, the motion conversion mechanism of this invention utilizes a rack-pinion mechanism; see, for example, WO-A-87/01167, which comprises the features defined in the preamble of claim 1 and 2 respectively.

### Background of the invention

The conventional motion conversion mechanism has been contributing very much to mechanical engineering, mechanical industries and other related fields since the Industrial Revolution.

On the other hand, it is also a fact that the designers in these fields have been restricted within the motion characteristics of the conventional motion conversion mechanism due to their unconscious recognition of the seemingly invariable features of the conventional motion conversion mechanism.

In the conventional engines, the motion conversion mechanism is provided in the form of connecting rods and cranks disposed between pistons and a crank shaft, and such a motion conversion mechanism has features of limitations as described below.

First, the accelerations of pistons are very low in the vicinity of the dead points.

Second, the piston velocity or the piston displacement is defined by the angular position of the crank, and therefore, an arbitrary regulation of the motion throughout the whole stroke is impossible.

Third, deviated components of the piston force continuous act the cylinder wall and toward the revolution centre of the crank shaft, thereby making the movements of the pistons unstable, and causing friction to be increased. Because of these limiting features, there are many restrictions in obtaining the optimum motion of piston, and accordingly, it is difficult to control the combustion condition in the working chamber, thereby making it impossible to obtain the maximum power and the maximum efficiency in an engine.

### Summary of the invention

An object of the present invention is to provide a motion conversion mechanism in which the deceleration/acceleration rate of the piston can be controlled and all the piston forces are made to act tangentially on the rotation shaft.

Another object of this invention is to provide a reciprocating internal combustion engine in which the rapid increase of gas temperature can be controlled and accordingly the heat loss caused by heat transfer and the increase of specific - heat or heat dissociation of the gas can be minimized by control of piston speed in the early combustion period.

Still another object of this invention is to provide an engine in which the rapid increase of the gas pressure can be controlled so that the increase of compression ratio and the super-charging of gas can be easily obtained by approaching the most ideal constant - pressure engine cycle through the controlling of the piston speed in the early combustion period.

Still another object of this invention is to provide an engine in which the ignition delay before ignition can be easily controlled through the control of fuel-air mixture condition such as fuel-air mixing, gas temperature and pressure and swirling of gas by controlling the piston speed in the late compression period.

Still another object of this invention is to provide an engine in which the ignition delay in the late combustion period can be easily controlled through the control of the combustion speed during combustion period by controlling the piston speed.

Still another object this invention is to provide an engine in which a wide range of fuel grade can be used because the combustion knock can be controlled through the ignition delay and the combustion speed.

Still another object cf this invention is to obtain an engine which is smaller in bulk and weight than the conventional engine.

Still another object of this invention is to provide a motion conversion mechanism which can be used also in compressors, pumps, cutting machines and the like.

In a first aspect, this invention provides a motion conversion mechanism for converting between rotating motion and reciprocating motion comprising:
a reciprocator having a pair of racks mutually spaced opposing each other;
reciprocator guides for slidably supporting said reciprocator in the direction of its reciprocating movement; and
a pinion rotatably disposed between said two racks and having pinion teeth along a part of its circumference, said pinion and pinion teeth adapted to cooperate alternately with either one of said racks such that said pinion completes substantially a half rotation about its rotational axis per stroke of said reciprocator, characterised by said reciprocator being shaped to define a linear reciprocating stroke or an arcuate reciprocating stroke, and by there being provided acceleration/deceleration means for accelerating and decelerating the reciprocator at or in a vicinity of an upper or lower dead point of the reciprocator's reciprocating motion, said acceleration/deceleration means comprising at least one of said racks having acceleration/deceleration teeth adapted to cooperate with acceleration/deceleration teeth provided on said pinion such that the intersection of a straight line drawn from the axis of the pinion and perpendicular to a reciprocating movement of the racks and a common normal line passing through the point of contact between the face of a said acceleration/deceleration tooth of the rack and the face of the corresponding acceleration/deceleration tooth of the pinion gradually and smoothly moves along the straight line as the pinion rotates.

In a second aspect, this invention provides a motion conversion mechanism for converting between rotating motion and reciprocating motion comprising:
a reciprocator having a pair of racks mutually spaced opposing each other;
reciprocator guides for slidably supporting said reciprocator in the direction of its reciprocating movement; and
a pinion rotatably disposed between said two racks and having pinion teeth along a part of its circumference, said pinion and pinion teeth adapted to cooperate alternately with either one of said racks such that said pinion completes substantially a half rotation about its rotational axis per stroke of said reciprocator, characterised by said reciprocator being shaped to define a linear reciprocating stroke or an arcuate reciprocating stroke, and by there being provided acceleration/deceleration means for accelerating and decelerating the reciprocator at or in a vicinity of an upper or lower dead point of the reciprocator's reciprocating motion, said accelerating/ decelerating means comprising a sliding member disposed on the reciprocator and having a sliding face contacting a cam sliding face when the reciprocator is at or near a dead point of the reciprocating movement, such that the intersection of a straight line drawn from an axis of the pinion and perpendicular to the reciprocating movement of the racks and a common normal line passing through a point of contact between said cam sliding face and said sliding face of said sliding member gradually and smoothly moves along the straight line as the pinion rotates.

In a third aspect, this invention provides a motion conversion mechanism for converting between rotating motion and reciprocating motion comprising an arcuate reciprocator having two arcuate racks mutually spaced opposing each other; guides for supporting said reciprocator in its reciprocating movement along an arcuate path; and a pinion disposed between said racks of said reciprocator having pinion teeth along a part of a circumference, said pinion teeth alternately engaging said racks, said pinion rotating about an axis in response to reciprocating movement of said reciprocator.

In a fourth aspect, this invention provides a reciprocating internal combustion engine comprising:
a reciprocating piston;
a rotatable shaft; and
a motion conversion mechanism in accordance with any one of the first, second and third aspects, for converting the reciprocation of the piston into rotation of the shaft.

### Brief description of the drawings

The above objects and other advantages of the present invention will become more apparent by describing the preferred embodiments of the present invention in detail with reference to the attached drawings in which:
Figure 1 is a schematical plan view of an embodiment of the motion conversion mechanism according to the present invention, showing the state immediately before the descending of the reciprocator after the ascending thereof;
Figure 2 is an illustration of the actuation state of the motion conversion mechanism of Figure 1, showing the beginning of the descending of the reciprocator after the completion of the ascending thereof;
Figure 3 is a plan view of a part of another embodiment of the motion conversion mechanism according to the present invention, in which staired teeth are provided;
Figure 4 shows a modification method for one of the teeth for decelerating or accelerating the reciprocator of the motion conversion mechanism according to the present invention;
Figure 5 is an exemplary view of the teeth of the rack and pinion, in which a modification is provided based on the method of Figure 4;
Figure 6 shows the principle of the constitution of a deceleration/acceleration cam used for decelerating/accelerating the reciprocator of the motion conversion mechanism according to the present invention;
Figure 7 is a schematic plan view showing the relationship between the locus of a violence prevention roller and the face of a violence prevention cam as an example of a violence prevention means;
Figure 8 is a schematical plan view of another embodiment of the motion conversion mechanism according to the present invention, which is additionally provided with various deceleration/acceleration means based on the various methods such as the modification of the tooth, and means in the form of the deceleration/acceleration cam and in the form of the violence prevention method, which are respectively mentioned with reference to Figures 4,5,6 and 7;
Figure 9 is a side view of the pinion of Figure 8 aimed at showing the fact that every element of the pinion has its own movement plane;
Figure 10 is a plan view of the motion conversion mechanism aimed at showing the fact that the violence prevention roller of Figure 8 and the pinion of the mechanism can be actuated without interfering with each other;
Figure 11 is a schematic plan view of an embodiment of a straight reciprocating internal combustion engine according to the present invention, in which the reciprocator of the motion conversion mechanism of the present invention is shown to be inserted into the cylinder of the engine;
Figure 12 is a schematic plan view of another embodiment of a straight reciprocating internal combustion engine, in which the reciprocator of the motion conversion mechanism is shown to be reciprocating at the outside of the cylinder of the engine;
Figure 13 represents the schematical constitution of a plurality of the motion conversion mechanisms connected in series;
Figure 14 is a schematic plan view of an embodiment of an oscillatory reciprocating internal combustion engine according to the present invention;
Figure 15 is a sectional view taken along the line A-A of Figure 14;
Figure 16 is a sectional view taken along the line A-A of Figure 14, in which the oscillation shaft and the connection element for connecting the oscillation shaft and the piston base wheel of Figure 14 are removed, thereby forming a doughnut-shaped engine;
Figure 17 is a schematical plan view of another embodiment of an oscillatory reciprocating internal combustion engine according to the present invention, in which the oscillation shaft of the piston base wheel and the pinion shaft of Figure 14 are disposed perpendicularly to each other;
Figure 18 is a sectional view taken along the line B-B of Figure 17;
Figure 19 is a schematic constitution of a conventional reciprocating compressor using a stabilizing head; and
Figure 20 is a schematic constitution of a reciprocating compressor adopting the motion conversion mechanism of the present invention.

### Description of the preferred embodiments

In the following description, if not otherwise specified, the driving unit, that is, the pinion will be assumed to rotate anticlockwise.

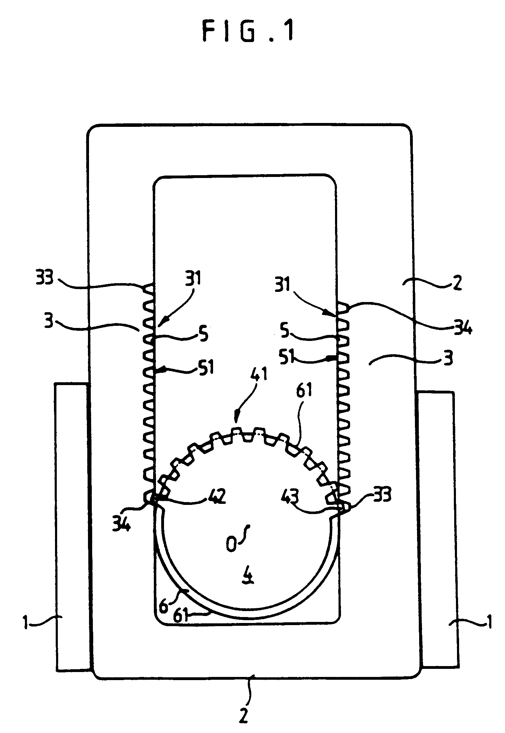

In the first place, an embodiment of the motion conversion mechanism of the invention will be described referring to Figure 1.
Figure 1 shows:
a rectangular shaped reciprocator 2 sliding along reciprocator guides 1,1 and vertically supported by the reciprocator guides 1,1 ;
a pair of racks 3,3 which possess the reciprocator teeth 31,31 at the opposite inner sides of the reciprocator 2;
a pinion 4 rotating in the space between the racks 3,3 keeping a fixed position 0, and having pinion teeth 41 along about a half of the circumference thereof;
a pair of first sliding members 5,5 which possess first sliding faces 51,51; and
a second sliding member 6 which possesses a second sliding face 61 which performs sliding contact with the first sliding faces 51,51.

The extended lengths of the pinion teeth 41 and the reciprocator teeth 31 should be determined such that the first pinion tooth 42 and the first reciprocator tooth 34 of the rack 3 of one side start their meshing at the moment when the last pinion tooth 43 and the last reciprocator tooth 33 of the rack 3 of the other side depart from their contact each other.

Meanwhile, the first sliding faces 51,51 and the second sliding face will continue their contact through the whole stroke.

On the one hand, at the moment when the last reciprocator tooth 33 and the last pinion tooth 43 depart from their contact each other, the reciprocator 2 should start its downward movement upon the start of the contact between the first pinion tooth 42 and the first reciprocator tooth 34, and therefore, it is available to add some modifications to the first and the last teeth 34,42,33,43 or the teeth near them to avoid interference between them.

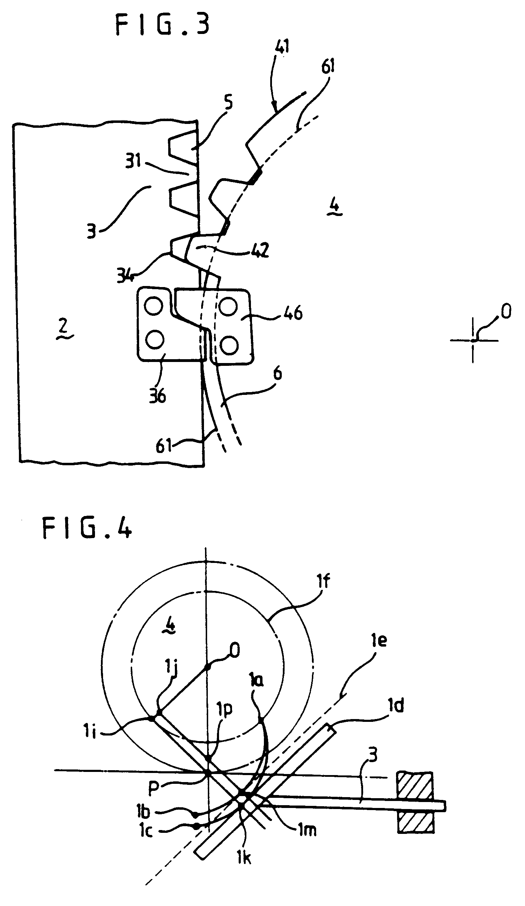

On the other hand, if there exists an uneasiness about the meshing between the said first teeth 42,34, then a staired tooth 36 on the reciprocator 2 and a staired tooth 46 on the pinion 4 as illustrated in Figure 3 will be available.

Further these staired teeth 36,46,can be provided in the form of teeth having two or more steps.

Now the actions of the motion conversion mechanism of this invention will be described.

Just before the downward movement of the reciprocator as illustrated in Figure 1, the last pinion tooth 43 will be coming out of the tooth space of the last reciprocator tooth 33, and the first pinion tooth 42 will be entering into the tooth space of the first reciprocator tooth 34.

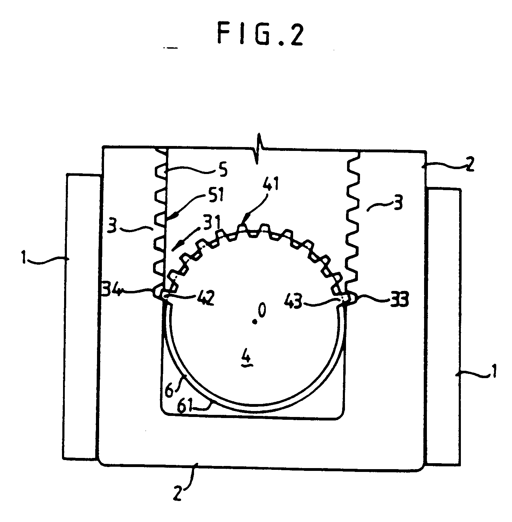

At the beginning of the downward movement of the reciprocator as illustrated in Figure 2 after more anticlockwise rotation of the pinion, the last pinion tooth 43 will have completely come out of the tooth space of the last reciprocator tooth 33, while the first pinion tooth 42 and the first reciprocator tooth 34 will begin their contact.

If the staired teeth 36,46 are provided, they will also start their contact.

Upon further rotation of the pinion, and during the time when the reciprocator tooth 31 of the left side is meshed with the pinion tooth 41, the reciprocator tooth 31 of the right side will face the part of pinion where the pinion tooth 41 is not built, so that the downward movement of the reciprocator may continue freely.

After a while, as the reciprocator 2 approaches the end of its downward movement that is, coming just before its dead point, the above related actions are repeated and the reciprocator 2 reverses its movement to the upward direction.

By repeating the above related actions, the reciprocator 2 will continue reciprocating within the range of the stroke due to the rotation of the pinion 4.

On the other hand, if the above related embodiment and the actions of the reciprocator are followed, the reciprocator 2 reverses its direction of movement instantly at every dead point, and accordingly an intense mechanical impact of inertia is expected. Therefore, there needs to be some countermeasure in the form of a deceleration and acceleration of the reciprocator's velocity at about every dead point of the reciprocator's movement against the impact of inertia unless the impact due to inertia is negligible.

For example, the said countermeasure will be required in a reciprocating internal combustion engine where a piston of considerable mass is reciprocating at a high speed.

Now the deceleration and acceleration means of the motion conversion mechanism for the movements of the reciprocator and the pinion according to the present invention will be described.

As an embodiment of the deceleration and acceleration means, the method of modifying the reciprocator and the pinion teeth 31,41 will be described below.

At first, the principle of modifying the teeth 31,41 will be described by referring to Figure 4 which is drawn by utilizing the typical figure of the rack-pinion mechanism based on the involute curve, that is, the said typical figure ordinarily used for general explanations.

1a-1c indicates an involute curve which represents the normal tooth's contact face and 1d represents the contact face of a tooth of the rack.

1a-1b indicates a transfigured curve representing the modified tooth which is to reduce the speed of 1d.

As the pinion 4 rotates and the involute curve 1a-1c slides in contact with 1d, the common normal line 1i-1k at the contact point 1k always passes through the pitch point P and contacts tangentially with the basic circle 1f at 1i,so that the rack 3 should move to the right in a constant speed. Then, if the involute curve 1a-1c and the rack contact face 1d should be modified in a proper method, the rack speed can be decelerated or accelerated.

Here, to avoid a complication, only the curvature of the involute curve 1a-1c is modified, but leaving 1d as a flat plane.

The involute curve 1a-1c is the locus of the end 1c of the thread that is assumed to have no thickness and no elasticity, when the thread is unravelled in a taut state from the basic circle 1f as the thread end 1c starting to be unravelled from the point 1a.

Now, a variation will be shown on the unravelling thread. For example, the unravelled thread should contract in a certain rate-linear or quadratic or other rate, the contraction being made in a simultaneous manner with the unravelling. Then, the locus of the thread end 1c will be transformed into another curve shown by 1a-1b which has a reduced radius of curvature compared with the involute curve 1a-1c.

Another case will be described in which this transfigured curve 1a-1b drives the rack tooth 1d.

When the pinion 4 has rotated as much as shown in Fig-4, 1d will be contacting the transfigured curve 1a-1b at the position of 1e, and the common normal line at their contact point 1m will pass through the point 1j on the radius 1i-O and the point 1p on the straight line which links the rotation centre O of the pinion and the pitch point P. Then it can be easily acknowledged that, due to a delay in the rack movement after 1d has been driven by the transfigured curve 1a-1b, 1d will reach only the position 1e, and that the instantaneous velocity of the rack 3 also will have been decelerated to a velocity equivalent to the ratio O1P/OP.

There are innumerable contact points before 1m after the first contact between 1d and 1a-1b at point 1a, and the intersection point of the straight line OP and the common normal line at every innumerable contact point mentioned above moves smoothly to the point 1p from the pitch point P while the contact of 1d with 1a-1b progresses, eventually 1d or the rack 3 being decelerated.

To the contrary, it can be assumed that the unravelled thread should be elongated in a certain rate, and the elongation should be made in a simultaneous manner with the unravelling.

Then, the transfigured curve is drawn by the locus of eventually, the reciprocator. Accordingly, it can be acknowledged that a deceleration or acceleration between the pinion and the reciprocator can be achieved through the transfigured tooth.

The above description about transfiguring the tooth has been made by referring to the rack-pinion mechanism based on the involute curve for an easy understanding, but because the transfiguring can be also achieved with either the basic type of tooth of the cycloidal gear, or other generalized basic gears, or even an unknown special type of a basic tooth, the transfiguring method and the transfigured tooth shape will become various.

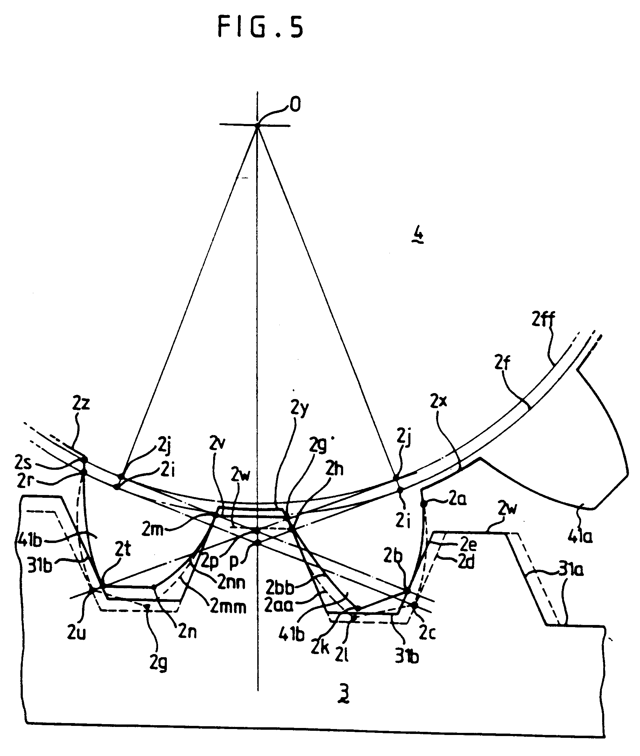

Figure 5 shows a more specific example of the transfigured teeth based on the principle of Figure 4 and more visualized description will follow.

At first, the non-transfigured tooth will be called a normal pinion tooth 41a and a normal reciprocator tooth 31a.

In the figure, the first transfigured pinion tooth 2bb is at the instant of ending a contact with the rack 3 and the second transfigured pinion tooth 2nn is at the instant of starting a contact with the rack 3. The supposed pinion tooth 2aa which is illustrated by dotted curve is also an involute tooth which has 2f as its basic circle as in the case of the normal pinion tooth 41a.

The first transfigured tooth 2bb will be described first. 2a-2b is a transfigured curve made from the involute curve 2a-2c by a similar transfiguring method as in the case of Figure 4, the involute curve 2a-2b decelerating the rack 3.

The position of the advancement of 2d at the moment when the involute curve 2a-2c started contacting with 2d at the point 2a and the position of the advancement of 2e at the moment when the transfigured curve 2a-2b started contacting with 2e at the point 2a were equal to each other, and at the same moment, 2d and 2e have the same instantaneous velocity because the common normal line at point 2a passed through the pitch point P.

Then, as the pinion 4 rotates, the intersection point of the straight line OP and the common normal line at the contact point between 2a-2b and 2e has been moved smoothly toward the pinion rotation centre O up to a point 2p after starting from the pitch point P, and accordingly 2e or the rack 3 has been decelerated, and eventually its position has become as illustrated in Figure 5.

On the other hand, the transfigured curve 2g-2k which is the rear contact face of the first transfigured pinion tooth 2bb began its contact with the rack 3 starting from the point 2k, and after a continuous contact with the rack 3, the transfigured curve has come to end its contact with the rack 3 at the point 2g as illustrated in Figure 5.

Therefore, the two common normal lines at the two simultaneous contact points ( one is in the face 2a-2b and another one is in the face 2g-2k ) have passed through the same point on the straight line OP, and their passing point has been moved smoothly toward the pinion rotation centre O up to the point 2p as illustrated in Figure 5.

Consequently, the last contact point 2g of the rear transfigured curve 2g-2k is a point located somewhat nearer to the pinion rotation centre 0 than the last contact point 2h of the rear contact face 2h-2l of the supposed involute tooth 2aa. Accordingly, the bottom 2y and the end face 2v behind the rear transfigured curve 2g-2k become nearer to the pinion rotation centre 0 than the bottom 2x and the end face 2w which are positioned in front of the transfigured curve 2a-2b respectively .

Now, regarding the second transfigured tooth 2nn, the description will become almost the same as that for the first transfigured tooth 2bb, and therefore, only a brief mention will be made below.

The supposed involute tooth 2mm has the point 2p as its pitch point and has 2ff as its basic circle, and accordingly 2ff contacts tangentially with the common normal lines 2b-2p and 2g-2p which are respectively set up at the last contact points 2b and 2g of the first transfigured tooth 2bb.

Then, the second transfigured tooth 2nn is transfigured from 2mm.

The two common normal lines at the two simultaneous contact points in both of the front and the rear sides of the transfigured tooth 2nn also pass through the same point on the straight line OP, and their passing point also moves smoothly toward the pinion rotation centre O, eventually the rack 3 being decelerated as the pinion 4 rotates anticlockwise. Thus the transfiguring is made to have characteristics of a smooth linkability between the two transfigured teeth 2bb, 2nn in such a manner as makes the movement of the intersection point of the common normal line and the straight line OP smooth up to the point 2p, passing the point 2p and beyond.

Here, the last contact point 2s of the rear transfigured curve 2s-2t and the bottom 2z behind 2s-2t become nearer to the pinion rotation centre O than 2g and 2y respectively.

In other words, in the case where the pinion 4 should decelerate the velocity of the rack 3, the transfigured teeth of the pinion 4 and the rack 3 will be at the positions advanced toward the pinion rotation centre O, and the common normal line also moves smoothly or gradually toward the pinion rotation centre O.

The above description is made under the assumption that the second transfigured tooth 2nn should begin a contact with the rack 3 as soon as the first transfigured tooth 2bb terminates its contact with the rack 3.

But the above descriptions are applicable also to the case where the contact of the first and second transfigured teeth are overlapped for a period.

On the other hand, in the case where the pinion 4 should accelerate the rack 3, it can be understood by imagining a reverse case, for example, by assuming that the pinion 4 of Figure 5 rotates in the reverse direction or clockwise. That is, this is a case where the pinion 4 should accelerate the rack 3 to the leftward direction and the intersection point of the common normal line with the straight line OP should move away from the pinion rotation centre O to the pitch point P.

Here, for the convenience of a later description, the transfigured pinion tooth which should accelerate or decelerate the rack rotating anticlockwise will be called an acceleration or a deceleration pinion tooth respectively; the transfigured reciprocator tooth which contacts with the above said transfigured pinion tooth will be called an acceleration or a deceleration reciprocator tooth; and the non-transfigured tooth of the pinion or the rack will be called a normal pinion tooth or a normal reciprocator tooth respectively. Then, each of the above classified tooth can be connected freely with each other.

All the above descriptions were made based on the concept of the spur-gear. Therefore, the transfiguring of the tooth was described in the above only by referring to the circumferential direction. But, in case of a stepped gear, a helical gear or other kinds of gears, the transfiguring for achieving the deceleration and acceleration of the rack can be provided also along the direction of the tooth width.

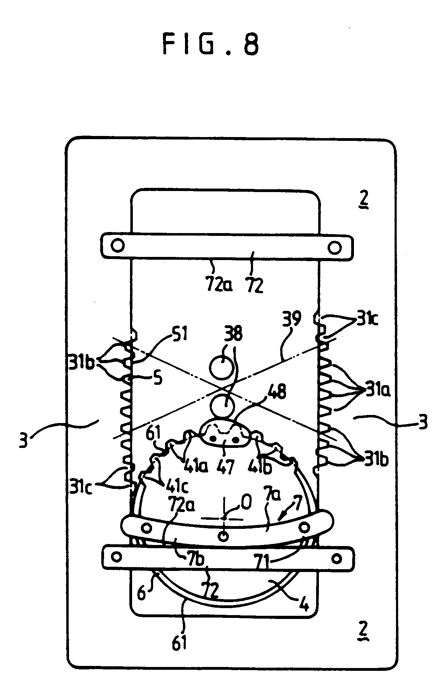

Another means for the deceleration and acceleration of the reciprocator in the motion conversion mechanism according to the present invention is provided by utilizing a deceleration and acceleration cam and a third sliding member. As illustrated in the Figure 8, the deceleration and acceleration cam 7 which possesses a cam sliding face 71 is provided on the pinion 4, and a third sliding member 72 which possesses a third sliding face 72a is provided on the reciprocator 2, about which descriptions will be presented below.

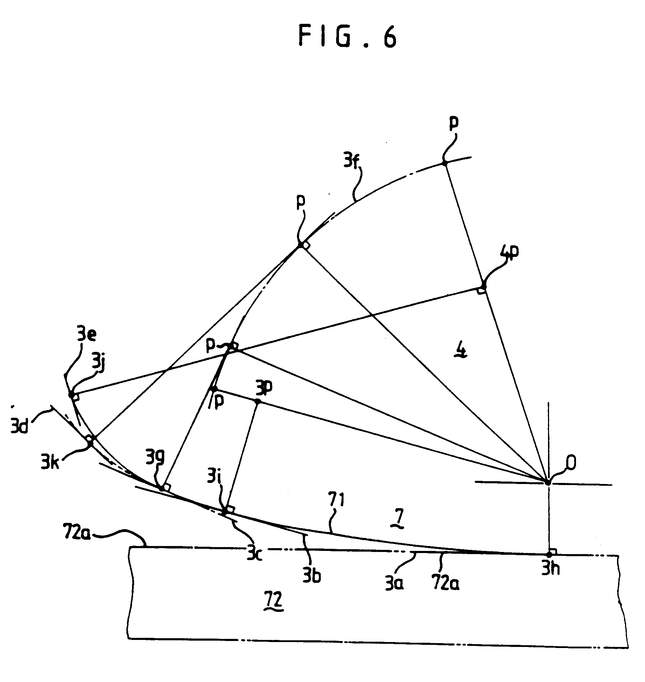

The principle of decelerating and accelerating the reciprocator will be described by referring to Figure 6 which is drawn schematically.

For the sake of the convenience of description, it is assumed that the third sliding face 72a is a plane face which is perpendicular to the direction of the reciprocator movement. 3a, 3b, 3c, 3d, 3e indicate the relative positions of the third sliding face 72a as against the cam sliding face 71 which is rotating according as the pinion 4 rotates. The sliding face 72a is shown as if it is rotating instead of the cam sliding face 71. 3h, 3i, 3g, 3j indicate the contact points between the cam sliding face 71 and the third sliding face 72a.

Referring to Figure 5 and Figure 6, because the movement direction of the third sliding face 72a in Figure 6 coincides with the movement direction of the rack 3 in Figure 5, the straight line OP in Figure 5 also coincides with the perpendicular lines 03p 04p in Figure 6 which are drawn perpendicularly from the pinion rotation centre O to the common normal lines which are originating from the contact point between the cam sliding face 71 and the third sliding face 72a, and accordingly, 3f in Figure 6 coincides with the pitch circle of the normal pinion teeth 41a in Figure 5. 3a indicates the position of the third sliding face 72a of the third sliding member 72 at the moment when the reciprocator is at its upper dead point, and at this moment, the common normal line originating from the contact point 3h between the cam sliding face 71 and the third sliding face 72a passes through the pinion rotation centre O, consequently, the reciprocator velocity becoming zero.

Now, it will be assumed that the contact point 3i is any point between 3h and 3g, and that 3p is the foot of the perpendicular line drawn from the pinion rotation centre O to the common normal line at 3i. When the pinion 4 should have rotated a little more from the above assumed position, if the foot of the perpendicular line from the pinion rotation centre O to the common normal line originating from the contact point between the cam sliding face 71 and the third sliding face 72a should become a point separated a little farther from the pinion rotation centre O as compared with the above assumed foot 3p, then the cam sliding face 71 will accelerate the third sliding face 72a or the third sliding member 72.

Now, it will be assumed that the contact point 3j is any point behind 3g, and that 4p is the foot of the perpendicular line drawn from the pinion rotation centre O to the common normal line originating from 3j. When the pinion 4 has rotated a little more from the above assumed position, if the foot of the perpendicular line from the pinion rotation centre O to the common normal line originating from the contact point between the cam sliding face 71 and the third sliding face 72a becomes a point nearer to the pinion rotation centre O compared with the above assumed foot 4p, then the cam sliding face 71 will decelerate the third sliding face 72a or the third sliding member 72.

Here, if the common normal line originating from the contact point 3g tangentially contacts the pitch circle 3f as illustrated in Figure 6, and when the normal pinion teeth 41a in Figure 5 contact with the normal reciprocator teeth 31a in Figure 5, if the reciprocator velocity is called the normal velocity, then the third sliding face 72a or the reciprocator will be accelerated from a zero velocity up to the normal velocity by the cam sliding face 71 between 3h and 3g, and then, will be decelerated below the normal velocity by the cam sliding face 71 after the point 3g. On the other hand, if an involute curve is linked to the cam sliding face 71 after 3g as shown by dotted line in Figure 6, the third sliding face 72a or the reciprocator will maintain its normal velocity with the help of the cam sliding face 71 after 3g. Of course, the above two cam sliding faces are linked in such a manner as causes the movement of the intersection point of the common normal line and the straight line OP which is coinciding with the perpendicular line from the rotation center to be smooth around and at the link point 3g.

Now, the section of the cam which decelerates the reciprocator will be called the deceleration cam, and the section of the cam which accelerates the reciprocator will be called the acceleration cam. Then the deceleration and acceleration means utilizing the deceleration and acceleration cam is serviceable at and around the dead point of the reciprocator. In this context, the two deceleration/acceleration means in the form of a cam and in the form of transfigured teeth can be used together.

In Figure 8, there is shown a preferred constitution of the motion conversion mechanism according to the present invention employing the deceleration and acceleration means whose basic structures were described by referring to Figures 4, 5, and 6, and there, all the members are at their upper dead point positions. The acceleration pinion teeth 41c, the normal pinion teeth 41a and the deceleration pinion teeth 41b are provided along a part of the circumference of the pinion 4, and a deceleration/acceleration cam 7 is disposed at a position opposite from the teeth portion of the pinion 4.

Now, the action of an example of the motion conversion mechanism wherein the examples of the deceleration and acceleration means are provided will be described while referring to Figure 8.

As the pinion 4 progresses in its rotation from the illustrated upper dead point position of Figure 8, the reciprocator 2 will begin to be accelerated downwards from a zero velocity through the contact between the acceleration cam 7b and the third sliding face 72a. Then, the acceleration of the reciprocator 2 will continue with the contact between the acceleration pinion teeth 41c and the acceleration reciprocator teeth 31c. Then, as the contact between the normal pinion teeth 41a and the normal reciprocator teeth 31a continues, the reciprocator 2 will maintain the normal velocity, and then, as the contact between deceleration teeth 41b, 31b continues, the reciprocator 2 will be decelerated and will continue the deceleration by the contact between the deceleration cam 7a and the third sliding face 72a, thereby ultimately reaching the lower dead point of a zero velocity. Next, the reciprocator 2 is accelerated reversely upwards, and then, being accelerated and decelerated as described above, the reciprocator 2 reaches again the upper dead point position of Figure 8. Consequently, the reciprocator 2 performs continuous reciprocating motions through the predetermined stroke. However, during the contact between the cam sliding face 71 and the third sliding face 72a, the movement of the reciprocator is governed only by the cam sliding face 72a but is not governed against a force from behind the cam sliding face 71. Accordingly, if some unexpected violent force should act on the reciprocator 2 from behind the deceleration and acceleration cam 7, the sliding contact between the cam sliding face 71 and the third sliding face 72a can be caused to fail, and eventually the motion conversion mechanism will lose its normal operational function. Accordingly, there needs to be some safeguard against a possible violation of the operation of the motion conversion mechanism. This safeguard will be called a violence prevention means.

An example of the violence prevention means 47, 38 is illustrated in Figure 8 schematically, and a description of it will be presented below.

In the drawing, there are shown two violence prevention rollers 38,38 located on a bridge 39 which is disposed across the opposite side frames of the reciprocator 2. These rollers are arranged symmetrically toward the centre of the reciprocator 2.

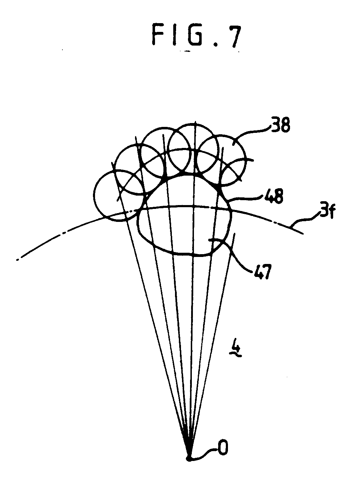

On the other hand, on the pinion 4, there is a violence prevention cam 47 which possesses a violence prevention face 48 which in turn contacts with the violence prevention rollers 38,38. The violence prevention face 48 can be obtained from the locus of the violence prevention rollers 38, 38, the said locus being drawn on the rotating pinion 4. That is, a properly selected part of a curve which contacts tangentially at the inside of the locus of the reciprocating violence prevention rollers 38,38 in the vicinity of the dead point of the reciprocator becomes the violence prevention face 48 as shown in Figure 7 schematically.

An example of actions of the violence prevention rollers 38,38 and the violence prevention cam 47 will be described below while referring to Figure 8.

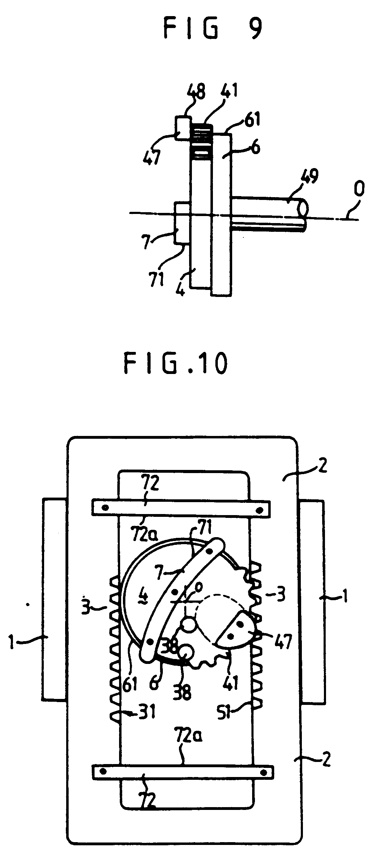

If the violence prevention cam 47 and the violence prevention rollers 38,38 should begin contact before end of the contact between the deceleration teeth 41b,31b, then,the violence prevention face 48 will push a violence prevention roller 38 upwards, and consequently will aid the upward movement of the reciprocator 2. Then the reciprocator 2 will be exclusively driven by the face 48 upwards without the help of the deceleration teeth 41b, 31b during the contact period of only the deceleration cam 7a and the third sliding member 72. Then during the period when the acceleration cam 7b contacts with the third sliding member 72, a violence prevention roller 38 pushes the violence prevention cam 47 downward and aids the reciprocator 2 in driving the pinion 4 so as for it to be rotated anticlockwise. Further, the contact between the violence prevention rollers 38,38 and the violence prevention cam 47 prevents the motion conversion mechanism from the situation in which the contact between the cam sliding face 71 and the third sliding face 72a will be broken. In this case, the two common normal lines at the contact points between a violence prevention roller 38 and the violence prevention cam 47 and at the contact point between the third sliding face 72a and the cam sliding face 71 will meet at a point on the straight line OP, which means that the instantaneous velocities of the above four components are equal to one another. An arrangement of the said mechanism will be described below, in which the respective corresponding elements should have an independent movement plane so as for them to move freely without interference between them. The description of each movement plane for the elements of the pinion 4 referring to Figure 9 which is a side view of the pinion 4 in Figure 8 will serve also as the description of each movement plane for the corresponding elements of the reciprocator 2.

Figure 9 illustrates three movement planes of independent character. The violence prevention cam 47 and the deceleration and acceleration cam 7 hold one movement plane in common, and the pinion teeth 41 has another movement plane, while the second sliding member 6 has another movement plane. Each of the violence prevention rollers 38,38, the third sliding member 72, the reciprocator teeth 31 of the rack 3 and the first sliding member 5 moves freely without interference, and has the same movement plane as the said respective corresponding elements of the pinion 4. Although it is not illustrated in Figure 9, the overbridge 39 in Figure 8 where the violence prevention rollers 38, 38 in Figure 8 are located also has another independent movement plane, and passes by the side of the pinion 4 through the space where the pinion shaft 49 is not provided. Accordingly, the motion conversion mechanism operates freely as a whole.

Looking at the movement of the violence prevention rollers 38, 38 a little more closely, the inner curve of the locus drawn by the violence prevention rollers 38,38 will become like the dotted curve in Figure 10, and the outer curve will pass by the back side of the deceleration and acceleration cam 7.

Besides the above mentioned embodiment, there can be some other embodiments of the violence prevention means either in an inverse manner to provide the violence prevention rollers 38, 38 on the pinion 4 and the violence prevention cam 47 on the reciprocator 2, or to provide the so called violence prevention cams on both of the reciprocator 2 and the pinion 4, or to provide a tracing groove so as for a roller or pin to trace along the groove.

Because all the above descriptions which began with Figure 1 were made through some preferred examples, many other variations can be derived from the above mentioned basic idea of the motion conversion mechanism according to the present invention.

That is, it will be possible either that the second sliding member 6 is made in the form of a rectangular shaped slider between both sides of the first sliding members 5,5, and the pinion shaft 49 is installed to rotate freely in a hole of the said slider, or that the first and the second sliding members 5,5,6 are removed.

All the above descriptions were made on the basis that the reciprocator 2 should reciprocate along a simple straight lined stroke. But it is also possible that the reciprocator 2 should be formed, although it is not illustrated in the drawing, in a shape of circular arc. Then the reciprocator 2 should reciprocate along a track of a circular arc as observed from a side.

In this case, the racks 3 also are changed into a shape of a circular arc, and become a type similar to a bevel gear or a spiral gear, and the pinion 4 also is changed so as for it to correspond with the reciprocator 2 with all the corresponding elements.

The above mentioned embodiments of the motion conversion mechanism of the present invention represents only the basic idea for the better understanding of the present invention, and they are applicable to almost all the mechanical fields where the conventional motion conversion mechanism has been utilized such as in internal combustion engines, compressors, machine tools and the like.

Now, descriptions will be made on embodiments of the reciprocating internal combustion engine of the new system adopting the invented motion conversion mechanism described above.

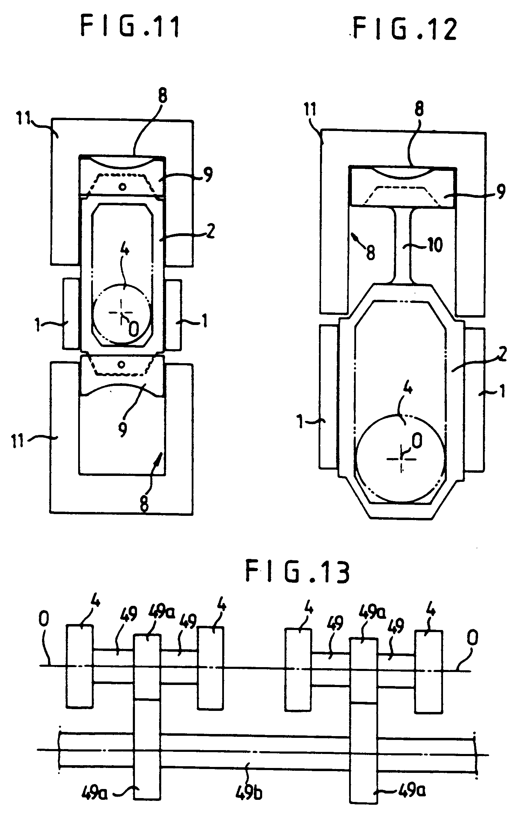

At first, the embodiment of the straight reciprocating internal combustion engine which is made by applying the invented motion conversidn mechanism to the conventional reciprocating internal combustion engine will be described referring to the schematic drawings of Figure 11 and Figure 12.

In Figure 11, there is shown an engine unit where the reciprocator 2 is moving being inserted in the cylinder 8, and the pistons 9,9 with the cylinders 8,8 are provided at both ends of a reciprocator 2.

In Figure 12, there is shown an engine unit where the reciprocator 2 is too large to enter the cylinder 8, and therefore, the piston 9 in the cylinder 8 is connected with the reciprocator 2 at the outside of the cylinder 8 by an extension rod 10, while the piston 9 with the cylinder 8 is provided at only one end of a reciprocator 2.

The example of the extension rod 10 as shown in Figure 12 has no hinge and looks like only an extension from the end of the reciprocator body.

The examples of the methods of connecting the piston 9 with the reciprocator body or the extension rod 10 are shown in Figure 11 and Figure 12.

When the piston 9 is connected to form an integral body with the end of the reciprocator body or the extension rod 10 as shown in Figure 12, it will be possible to intercept the direct heat flow from the piston 9 to the reciprocator 2 or the extension rod 10 by installing a network of oil lines at a proper position below the piston head as represented with a dotted line in Figure 12, and by supplying oil under pressure to the network.

When the piston 9 is connected with the reciprocator 2 or the extension rod 10 by utilizing the hinge or similar elements and by making the piston 9 and the reciprocator 2 or the extension rod 10 contact face to face with each other, as represented with a double dotted line and a small circle in Figure 11, then it is possible to intercept the direct heat flow from the piston 9 to the reciprocator 2 or the extension rod 10 by supplying oil to the clearance where the piston 9 and the reciprocator 2 or the extension rod 10 contact face to face. It is also possible to insert some elastic elements so as to absorb the possible vibration of the piston 9 due to ill-balanced gas pressure in the cylinder 8 and to stabilize the motion conversion mechanism.

On the other hand, this basic unit of engine can be connected in series or in a V-type, an X-type and the like as in the case of the conventional engine, by providing, as shown in Figure 13, two units of the pinions 4 at both ends of a pinion shaft 49 and by transmitting the mechanical power between the pinion 4 and the power shaft 49b through the link gears 49a, 49a which are installed on both the pinion shaft 49 and the power shaft 49b.

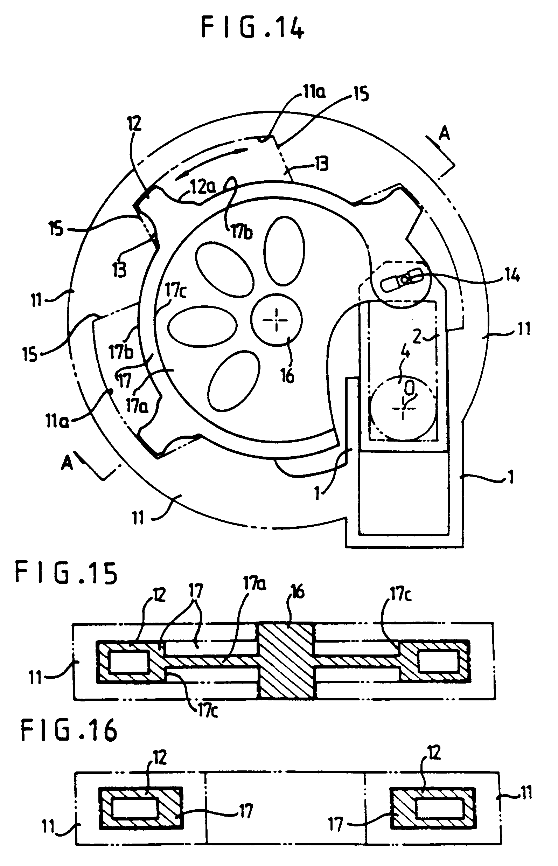

Now, descriptions will be made on the embodiment of the oscillatory reciprocating internal combustion engine of the new system adopting the invented motion conversion mechanism referring to Figure 14 and Figure 15.

The invented oscillatory reciprocating engine has the characteristic that it adopts the invented motion conversion mechanism and a piston base wheel 17 in order to install many pistons 12 in a basic unit of engine.

A ring-shaped piston base wheel 17 which is provided with a cut-out portion near its peripheral edge is installed in a flat and round contoured casing 11 by disposing its oscillation shaft 16 at the centre of the said casing 11.

The freely rotatable oscillation shaft 16 is provided at the centre of the piston base wheel 17, and the piston base wheel 17 and the oscillation shaft 16 are connected with each other by means of a certain connection element such as a web 17a.

Three protruded pistons 12 are provided at the outer circumferential face of the piston base wheel 17, and the invented motion conversion mechanism is linked by means of a link pin 14 to the piston base wheel 17 through the cut-out portion of the piston base wheel 17 so that the piston base wheel 17 and the protruded pistons 12 should perform the oscillatory reciprocating motions.

On the other hand, each of the plurality of a limited space 13 has a shape as illustrated in the drawing and is surrounded by a circular inner face 11a of the casing 11, a side 12a of the protruded piston 12, a circular outer face 17b of the piston base wheel 17, and a partition wall 15 of the casing 11, and serves as a working chamber for the combustion of fuel.

This working chamber's volume changes in accordance with the oscillatory reciprocating motion of the protruded piston 12. Each of the working chambers performs independent fuel combustions, if there are provided independent fuel-air supply systems, ignition systems, gas exhaust systems and others.

The link pin 14 in Figure 14 performs straight reciprocating motions, while the link pin hole in the piston base wheel 17 performs oscillatory reciprocating motions so that the link pin 14 should slide in the link pin hole of the piston base wheel 17.

Here, a transformation of the above oscillatory reciprocating engine, which has no oscillation shaft 16 and no connection web 17a as shown in Figure 16, can be obtained by letting the casing 11 support the inner circular face 17c of the piston base wheel 17 and by letting the piston base wheel 17 perform oscillatory reciprocating motions as sliding on the said casing portion which supports the inner circular face 17c of the piston base wheel 17.

Then, the above mentioned transformed oscillatory reciprocating internal combustion engine will take a doughnut-shaped form as shown in Figure 16.

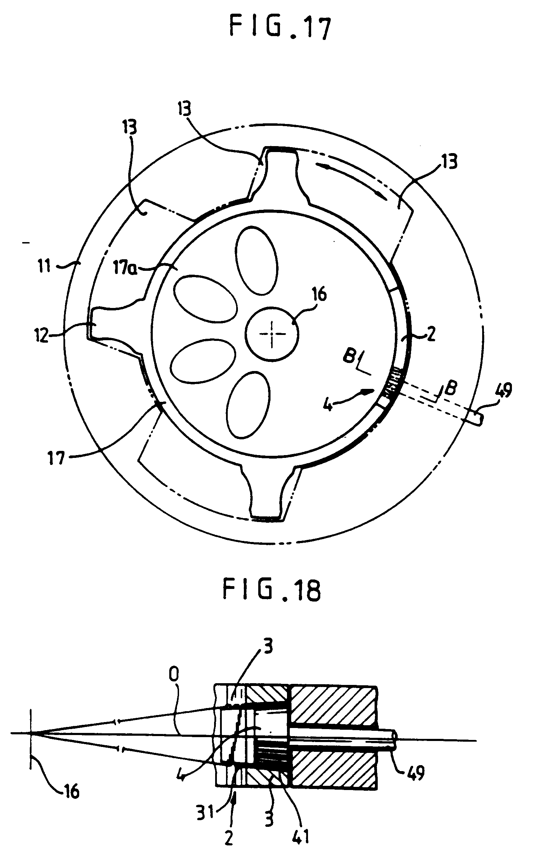

Another transformation of the oscillatory reciprocating internal combustion engine is constituted such that its pinion shaft 49 is perpendicular to the oscillation shaft 16 and its reciprocator 2 is formed in a shape of circular arc and is installed at the cut-out portion of the piston base wheel 17 by being connected end to end as illustrated in Figure 17 and Figure 18.

Accordingly, the reciprocator 2 performs oscillatory reciprocating motions along a track of a circular arc, while the racks 3,3 will become like a part of a similar shape of a bevel gear or a spiral gear.

Meanwhile, the pinion 4 also will change its shape correspondingly with the change of the reciprocator 2, with all the other corresponding elements of the pinion 4 and the reciprocator 2 being also changed in the same manner.

In this case also, the doughnut shaped engine without the oscillation shaft 16 and the web 17a can be obtained.

As all the above descriptions for this invented reciprocating internal combustion engine and the invented motion conversion mechanism are made based on embodiments or examples, it should be understood that all the possible transformations through the general common sense or idea and technique, for examples, either by changing the direction of the pinion shaft or of the oscillation shaft, or by making the normal and the transfigured teeth of the rack and the pinion through the utilization of a helical gear or a spiral gear or any other non-generalized teeth, or by changing the shapes of all the other elements or their installation positions, or by substituting friction members for the pinion and reciprocator teeth should belong to this invention.

The effects of this invented reciprocating internal combustion engine on the engine efficiency, on the engine power and on the engine size will be briefly described below.

First, the engine efficiency or the combustion efficiency and the engine power can be expected to be improved because the piston speed can be controlled through the whole stroke.

Second, because the reciprocator 2 or the piston base wheel 17 can be stabilized by the reciprocator guide 1,1 or the engine casing 11, the piston 9, 12 can also be stabilized without violent friction between the piston and the cylinder wall.

Third, because the piston force acts almost always tangentially on the pinion 4 or the pinion shaft 49, power transmission will be effective.

Further, because the connecting rod and the crank of the conventional engine should disappear, engine size can become smaller and lighter.

Adding a little more about the improvement of the engine power and efficiency, by absorbing the rapid increase of the gas pressure in the early combustion period through control of the piston speed, all the reciprocating internal combustion engines including the gasoline engine and the diesel engine can be expected to approach the most close level up to the ideal constant pressure cycle engine, and accordingly, by increasing the compression ratio and supercharging the intake gas which can be easily obtained, the engine power and efficiency can be expected to be highly improved, and simultaneously, by control of the piston speed in the combustion preparation period and in the combustion period, the fuel combustion speed can be expected to be highly promoted or the control of the abnormal combustion can be expected to be easily obtained.

Further, the maximum gas temperature can be expected to be lowered in spite of the fast fuel combustion speed so that the heat energy loss caused by heat transfers, the increase of specific heat and heat dissociations of the burned gas can be expected to be minimized in the early combustion period. Accordingly, drastic improvement of the engine efficiency, the engine power and other engine functions can be expected.

On the other hand, the motion conversion mechanism of this invention can be expected to be widely utilized in almost all the fields requiring the motion conversion mechanism between the rotating motion and the reciprocating motion such as machine tools, pumps, compressors, engines and the like.

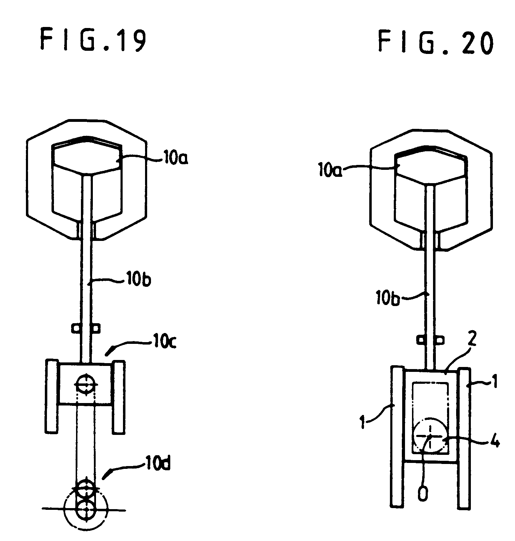

For example, the schematic constitutions of a conventional reciprocating compressor and a new system of reciprocating compressor which is utilizing this invented motion conversion mechanism are comparatively illustrated in Figure 19 and Figure 20. Figure 19 shows a conventional reciprocating compressor which is utilizing a stabilizing head 10c and a piston rod 10b between the piston 10a and the crank-connecting rod mechanism 10d to stabilize the motion of the piston 10a, while Figure 20 shows a new system of the reciprocating compressor where the piston 10a is directly mounted on the invented motion conversion mechanism through a piston rod 10b without any other special auxiliary means because the reciprocating motion itself of the piston 10a or the reciprocator 2 is stabilized by the reciprocator guide 1,1.

If the new system of the reciprocating compressor as shown in Figure 20 is used, the elevation of the volumetric efficiency which is directly related to the compression efficiency can be expected, because the piston speed can be controlled properly.

As another example, in the case of cutting machines, a uniform cutting tool speed can be easily obtained almost directly by employing the invented motion conversion mechanism without any complicated auxiliary mechanism with the result that the cutting machines should have small sizes.

## Claims

1. A motion conversion mechanism for converting between rotating motion and reciprocating motion comprising:
a reciprocator (2) having a pair of racks (3,3) mutually spaced opposing each other;
reciprocator guides (1,1) for slidably supporting said reciprocator (2) in the direction of its reciprocating movement; and
a pinion (4) rotatably disposed between said two racks (3,3) and having pinion teeth (41) along a part of its circumference, said pinion (4) and pinion teeth (41) adapted to cooperate alternately with either one of said racks (3,3) such that said pinion (4) completes substantially a half rotation about its rotational axis per stroke of said reciprocator (2), characterised by said reciprocator (2) being shaped to define a linear reciprocating stroke or an arcuate reciprocating stroke, and by there being provided acceleration/deceleration means for accelerating and decelerating the reciprocator (2) at or in a vicinity of an upper or lower dead point of the reciprocator's (2) reciprocating motion, said acceleration/deceleration means comprising at least one of said racks (3,3) having acceleration/deceleration teeth (31c,31b) adapted to cooperate with acceleration/deceleration teeth (41c/41b) provided on said pinion (4) such that the intersection of a straight line drawn from the axis of the pinion (4) and perpendicular to a reciprocating movement of the racks (3,3) and a common normal line passing through the point of contact between the face of a said acceleration/deceleration tooth (31c/31b) of the rack (3,3) and the face of the corresponding acceleration/deceleration tooth (41c/41b) of the pinion (4) gradually and smoothly moves along the straight line as the pinion (4) rotates.

2. A motion conversion mechanism for converting between rotating motion and reciprocating motion comprising:
a reciprocator (2) having a pair of racks (3,3) mutually spaced opposing each other;
reciprocator guides (1,1) for slidably supporting said reciprocator (2) in the direction of its reciprocating movement; and
a pinion (4) rotatably disposed between said two racks (3,3) and having pinion teeth (41) along a part of its circumference, said pinion (4) and pinion teeth (41) adapted to cooperate alternately with either one of said racks (3,3) such that said pinion (4) completes substantially a half rotation about its rotational axis per stroke of said reciprocator (2), characterised by said reciprocator (2) being shaped to define a linear reciprocating stroke or an arcuate reciprocating stroke, and by there being provided acceleration/deceleration means for accelerating and decelerating the reciprocator (2) at or in a vicinity of an upper or lower dead point of the reciprocator's (2) reciprocating motion, said accelerating/decelerating means comprising a sliding member (72) disposed on the reciprocator (2) and having a sliding face (72a) contacting a cam sliding face (71) when the reciprocator (2) is at or near a dead point of the reciprocating movement, such that the intersection of a straight line drawn from an axis of the pinion (4) and perpendicular to the reciprocating movement of the racks (3,3) and a common normal line passing through a point of contact between said cam sliding face (71) and said sliding face (72a) of said sliding member (72) gradually and smoothly moves along the straight line as the pinion (4) rotates.

3. A motion conversion mechanism as claimed in claim 2, wherein said acceleration/deceleration means comprises at least one of said racks (3,3) having acceleration/deceleration teeth (31c,31b) adapted to cooperate with acceleration/deceleration teeth (41c/41b) provided on said pinion (4) such that the intersection of a straight line drawn from the axis of the pinion (4) perpendicular to a reciprocating movement of the racks (3,3) and a line normal to and passing through the point of contact between the face of a said acceleration/deceleration tooth (31c/31b) of the rack (3,3) and the face of the corresponding acceleration/deceleration tooth (41c/41b) of the pinion (4) gradually and smoothly moves along the straight line as the pinion (4) rotates.

4. A motion conversion mechanism as claimed in any preceding claim, wherein there is provided a violence inhibiting means for inhibiting the reciprocator (2) and the pinion (4) from deviating from normal operation in the vicinity of said upper and lower dead points of said reciprocator (2) comprising a bridge (39) extending from one inner side of said reciprocator (2) to another inner side; a first violence inhibiting roller (38) disposed on one or other side of said bridge (39) and said pinion (4); and a violence inhibiting cam (47) disposed on a respective other side of said bridge (39) and said pinion (4) and having a violence inhibiting face (48) rolling on said violence inhibiting roller (38) as said pinion (4) is rotated.

5. A motion conversion mechanism as claimed in claim 4, wherein said first violence inhibiting roller (38) is disposed on said bridge (39) and said violence inhibiting cam (47) is disposed on said pinion (4).

6. A motion conversion mechanism as claimed in claim 4, wherein said first violence inhibiting roller (38) is disposed on the pinion (4) and said violence inhibiting cam (47) is disposed on said bridge (39).

7. A motion conversion mechanism as claimed in claim 5, including a second violence inhibiting roller disposed on said bridge (39), said violence inhibiting cam (47) contacting one of said violence inhibiting rollers when said reciprocator (2) is at a first dead point of said reciprocating movement and contacting another violence inhibiting roller when said reciprocator (2) is at a second dead point of said reciprocating movement.

8. A motion conversion mechanism as claimed in any preceding claim, wherein there is provided a staired tooth (46,36) disposed on said pinion (4) and on at least one of said racks (3,3) for promoting the initiation of meshing between said pinion teeth (41) and said teeth (31) disposed on said racks (3,3).

9. A motion conversion mechanism for converting between rotating motion and reciprocating motion comprising an arcuate reciprocator (2) having two arcuate racks (3,3) mutually spaced opposing each other; guides (1,1) for supporting said reciprocator (2) in its reciprocating movement along an arcuate path; and a pinion (4) disposed between said racks (3,3) of said reciprocator (2) having pinion teeth (41) along a part of a circumference, said pinion teeth (41) alternately engaging said racks (3,3), said pinion (4) rotating about an axis in response to reciprocating movement of said reciprocator (2).

10. A reciprocating internal combustion engine comprising:
a reciprocating piston (9);
a rotatable shaft (49); and
a motion conversion mechanism as claimed in any preceding claim, for converting the reciprocation of the piston into rotation of the shaft.

11. A reciprocating internal combustion engine as claimed in claim 10, wherein said reciprocating internal combustion engine comprises: a casing having a plurality of working chambers; a piston based wheel (17) disposed on said casing and having a plurality of pistons (12) projecting therefrom, each of said pistons (12) extending into one of said working chambers; and a recess formed in said casing and having an inner surface such that said reciprocator (2) is supported by said inner surface of said recess during reciprocating movement.

## Patentansprüche

1. Bewegungsumwandlungsvorrichtung zur Bewegungsumwandlung zwischen einer Drehbewegung und einer hin- und hergehenden Bewegung mit
einem hin- und hergehenden Bauteil (2), das zwei Zahnleisten (3,3) aufweist, die im Abstand voneinander und einander gegenüber angeordnet sind,
Führungen (1,1) für das hin- und hergehende Bauteil zum gleitenden Halten des hin- und hergehenden Bauteils (2) in der Richtung seiner hin- und hergehenden Bewegung und
einem Ritzel (4), das drehbar zwischen den beiden Zahnleisten (3,3) angeordnet ist und Ritzelzähne (41) über einen Teil seines Außenumfangs aufweist, wobei das Ritzel (4) und die Ritzelzähne (41) abwechselnd mit einer der beiden Zahnleisten (3,3) zusammenarbeiten können, derart, daß das Ritzel (4) im wesentlichen eine halbe Umdrehung um seine Drehachse pro Hub des hin- und hergehenden Bauteils (2) vollendet, dadurch gekennzeichnet, daß das hin- und hergehende Bauteil (2) so geformt ist, daß es einen linearen hin- und hergehenden Hub oder einen bogenförmigen hin- und hergehenden Hub bildet, und eine Beschleunigungs-/Verzögerungseinrichtung zum Beschleunigen und Verzögern des hin- und hergehenden Bauteils (2) am oberen oder unteren Totpunkt oder in der Nähe des oberen oder unteren Totpunktes der hin- und hergehenden Bewegung des hin- und hergehenden Bauteils (2) vorgesehen ist, wobei die Beschleunigungs-/Verzögerungseinrichtung wenigstens eine der Zahnleisten (3,3) umfaßt, die Beschleunigungs-/Verzögerungszähne (31c/31b) aufweisen, die mit Beschleunigungs-/Verzögerungszähnen (41c/41b) zusammenarbeiten können, die am Ritzel (4) vorgesehen sind, derart, daß der Schnittpunkt einer geraden Linie von der Achse des Ritzels (4) senkrecht zu der hin- und hergehenden Bewegung der Zahnleisten (3,3) und einer gemeinsamen normaler Linie, die durch den Berührungspunkt zwischen der Stirnfläche eines der Beschleunigungs-/Verzögerungszähne (31c/31b) der Zahnleiste (3,3) und die Stirnfläche des entsprechenden Beschleunigungs-/Verzögerungszahnes (41c/41b) des Ritzels (4) geht, allmählich und gleichmäßig entlang der geraden Linie wandert, wenn sich das Ritzel (4) dreht.

2. Bewegungsumwandlungsvorrichtung zur Bewegungsumwandlung zwischen einer Drehbewegung und einer hin- und hergehenden Bewegung mit
einem hin- und hergehenden Bauteil (2), das zwei Zahnleisten (3,3) aufweist, die im Abstand voneinander und einander gegenüber angeordnet sind,
Führungen (1,1) für das hin- und hergehende Bauteil zum gleitenden Halten des hin- und hergehenden Bauteils (2) in der Richtung seiner hin- und hergehenden Bewegung und
einem Ritzel (4), das drehbar zwischen den beiden Zahnleisten (3,3) angeordnet ist und Ritzelzähne (41) über einem Teil seines Außenumfangs aufweist, wobei das Ritzel (4) und die Ritzelzähne (41) abwechselnd mit einer der beiden Zahnleisten (3,3) zusammenarbeiten können, derart, daß das Ritzel (4) im wesentlichen eine halbe Umdrehung um seine Drehachse pro Hub des hin- und hergehenden Bauteils (2) vollendet, dadurch gekennzeichnet, daß das hin- und hergehende Bauteil (2) so geformt ist, daß es einen linearen hin- und hergehenden Hub oder einen bogenförmigen hin- und hergehenden Hub bildet und eine Beschleunigungs-/Verzögerungseinrichtung zum Beschleunigen und Verzögern des hin- und hergehenden Bauteils (2) am oberen oder unteren Totpunkt oder in der Nähe des oberen oder unteren Totpunktes der hin- und hergehenden Bewegung des hin- und hergehendes Bauteils (2) vorgesehen ist, wobei die Beschleunigungs-/Verzögerungseinrichtung ein Gleitelement (72) umfaßt, das am hin- und hergehenden Bauteil (2) angeordnet ist und eine Gleitfläche (72a) aufweist, die eine Kurvengleitfläche (71) berührt, wenn sich das hin- und hergehende Bauteil (2) an einem Totpunkt oder in der Nähe eines Totpunktes der hin- und hergehenden Bewegung befindet, derart, daß der Schnittpunkt einer geraden Linie von einer Achse des Ritzels (4) und senkrecht zur hin- und hergehenden Bewegung der Zahnleisten (3,3) und einer gemeinsamen normalen Linie, die durch einen Berührungspunkt zwischen der Kurvengleitfläche (71) und der Gleitfläche (72a) des Gleitelementes (72) geht, allmählich und gleichmäßig entlang der geraden Linie wandert, wenn sich das Ritzel (4) dreht.

3. Bewegungsumwandlungsvorrichtung nach Anspruch 2, bei der die Beschleunigungs-/Verzögerungseinrichtung wenigstens eine der Zahnleisten (3,3) mit Beschleunigungs-/Verzögerungszähnen (31c/31b) umfaßt, die mit Beschleunigungs-/Verzögerungszähnen (41c/41b) zusammenarbeiten können, die am Ritzel (4) vorgesehen sind, derart, daß der Schnittpunkt einer geraden Linie von der Achse des Ritzels (4) senkrecht zur hin- und hergehenden Bewegung der Zahnleisten (3,3) und einer Linie normal zu dem und durch den Berührungspunkt zwischen der Stirnfläche eines Beschleunigungs-/Verzögerungszahns (31c/31b) der Zahnleiste (3,3) und der Stirnfläche des entsprechenden Beschleunigungs-/Verzögerungszahns (41c/41b) des Ritzels (4) allmählich und gleichmäßig entlang der geraden Linie wandert, wenn sich das Ritzel (4) dreht.

4. Bewegungsumwandlungsvorrichtung nach einem vorhergehenden Anspruch, bei der eine eine Abweichung vom normalen Betrieb verhindernde Einrichtung vorgesehen ist, um zu verhindern, daß das hin- und hergehende Bauteil (2) und das Ritzel (4) von der normalen Arbeitsweise in der Nähe des oberen und unteren Totpunktes des hin- und hergehenden Bauteils (2) abweichen, welche Vorrichtung eine Brücke (39), die von einer Innenseite des hin- und hergehenden Bauteils (2) zur anderen Innenseite verläuft, eine eine Abweichung von der normalen Arbeitsweise verhindernde Rolle (38), die an der einen oder der anderen Seite der Brücke (39) und des Ritzels (4) vorgesehen ist, und eine eine Abweichung von der normalen Arbeitsweise verhindernde Kurvenscheibe (47) umfaßt, die auf der jeweils anderen Seite der Brücke (39) und des Ritzels (4) angeordnet ist und eine eine Abweichung von der normalen Arbeitsweise verhindernde Fläche (48) aufweist, die auf der eine Abweichung von der normalen Arbeitsweise verhindernden Rolle (38) abrollt, wenn das Ritzel (4) gedreht wird.

5. Bewegungsumwandlungsvorrichtung nach Anspruch 4, bei der die erste eine Abweichung von der normalen Arbeitsweise verhindernde Rolle (38) an der Brücke (39) angeordnet ist, und die eine Abweichung von der normalen Arbeitsweise verhindernde Kurvenscheibe (47) am Ritzel (4) angeordnet ist.

6. Bewegungsumwandlungsvorrichtung nach Anspruch 4, bei der die erste eine Abweichung von der normalen Arbeitsweise verhindernde Rolle (38) am Ritzel (4) angeordnet ist und die eine Abweichung von der normalen Arbeitsweise verhindernde Kurvenscheibe (47) an der Brücke (39) angeordnet ist.

7. Bewegungsumwandlungsvorrichtung nach Anspruch 5 mit einer zweiten eine Abweichung von der normalen Arbeitsweise verhindernden Rolle, die an der Brücke (39) angeordnet ist, wobei die eine Abweichung von der normalen Arbeitsweise verhindernde Kurvenscheibe (47) eine der eine Abweichung von der normalen Arbeitsweise verhindernden Rollen berührt, wenn sich das hin- und hergehende Bauteil (2) am ersten Totpunkt der hin- und hergehenden Bewegung befindet, und die andere eine Abweichung von der normalen Arbeitsweise verhindernde Rolle berührt, wenn sich das hin- und hergehende Bauteil (2) am zweiten Totpunkt der hin- und hergehenden Bewegung befindet.

8. Bewegungsumwandlungsvorrichtung nach einem vorhergehenden Anspruch, bei der ein Stufenzahn (46,36) am Ritzel (4) und an wenigstens einer der Zahnleiste (3,3) vorgesehen ist, um die Einleitung des Kämmens zwischen den Ritzelzähnen (41) und den Zähnen (31) zu fördern, die an den Zahnleisten (3,3) angeordnet sind.

9. Bewegungsumwandlungsvorrichtung zur Bewegungsumwandlung zwischen einer Drehbewegung und einer hin- und hergehenden Bewegung mit einem bogenförmigen hin- und hergehenden Bauteil (2), das zwei bogenförmige Zahnleisten (3,3) aufweist, die im Abstand voneinander und einander gegenüber angeordnet sind, Führungen (1,1) zum Halten des hin- und hergehenden Bauteils (2) in seiner hin- und hergehenden Bewegung entlang eines bogenbörmigen Weges und einem Ritzel (4), das zwischen den Zahnleisten (3,3) des hin- und hergehenden Bauteils (2) angeordnet ist und Ritzelzähne (41) entlang eines Teils seines Umfangs aufweist, wobei die Ritzelzähne (41) abwechselnd in die Zahnleisten (3,3) eingreifen, und das Ritzel (4) sich auf die hin- und hergehende Bewegung des hin- und hergehenden Bauteils (2) um eine Achse dreht.

10. Hubkolbenbrennkraftmaschine mit
einem Hubkolben (9),
einer drehbaren Welle (49) und
einer Bewegungsumwandlungsvorrichtung nach einem vorhergehenden Anspruch zum Umwandeln des Hubes des Kolbens in eine Drehung der Welle.

11. Hubkolbenbrennkraftmaschine nach Anspruch 10, wobei die Hubkolbenbrennkraftmaschine ein Gehäuse mit mehreren Arbeitskammern, ein Kolbensockelrad (17), das am Gehäuse angeordnet ist und mehrere Kolben (12) aufweist, die davon vorstehen, wobei jeder Kolben (12) sich in eine der Arbeitskammern erstreckt, und eine Aussparung umfaßt, die im Gehäuse ausgebildet ist und eine derartige Innenfläche hat, daß das hin- und hergehende Bauteil (2) durch die Innenfläche der Aussparung während der hin- und hergehenden Bewegung gehalten ist.

## Revendications

1. Mécanisme de conversion de mouvement permettant de réaliser une conversion entre un mouvement tournant et un mouvement en va-et-vient, comprenant :
un dispositif de déplacement en va-et-vient (2) comportant une paire de crémaillères (3, 3) mutuellement espacées et se faisant face l'une l'autre ;
des guides de dispositif de déplacement en va-et-vient (1, 1) destinés à supporter de façon coulissante ledit dispositif de déplacement en va-et-vient (2) suivant la direction de son déplacement en va-et-vient ; et
un pignon (4) disposé à rotation entre lesdites deux crémaillères (3, 3) et comportant des dents de pignon (41) le long d'une partie de sa circonférence, ledit pignon (4) et lesdites dents de pignon (41) étant conçus pour s'engrener en alternance avec l'une et l'autre desdites crémaillères (3, 3) de telle sorte que ledit pignon (4) termine sensiblement une demi-rotation autour de son axe de rotation pour chaque course dudit dispositif de déplacement en va-et-vient (2), caractérisé en ce que ledit dispositif de déplacement en va-et-vient (2) est conformé pour définir une course en va-et-vient linéaire ou une course en va-et-vient incurvée et en ce qu'est prévu un moyen d'accélération/décélération pour accélérer et décélérer le dispositif de déplacement en va-et-vient (2) au niveau d'un point mort supérieur ou inférieur du déplacement en va-et-vient du dispositif de déplacement en va-et-vient (2) ou au voisinage de celui-ci, ledit moyen d'accélération/décélération comprenant au moins l'une desdites crémaillères (3, 3) qui comporte des dents d'accélération/décélération (31c/31b) conçues pour s'engrener avec des dents d'accélération/décélération (41c/41b) prévues sur ledit pignon (4) de telle sorte que l'intersection d'une ligne rectiligne tracée depuis l'axe du pignon (4) et perpendiculaire à un déplacement en va-et-vient des crémaillères (3, 3) et d'une ligne normale commune passant par le point de contact entre la face d'une dite dent d'accélération/décélération (31c/31b) de la crémaillère (3, 3) et la face de la dent d'accélération/décélération correspondante (41c/41b) du pignon (4) se déplace progressivement et sans à-coups le long de la ligne rectiligne lorsque le pignon (4) tourne.

2. Mécanisme de conversion de mouvement permettant de réaliser une conversion entre un mouvement tournant et un mouvement en va-et-vient, comprenant :
un dispositif de déplacement en va-et-vient (2) comportant une paire de crémaillères (3, 3) mutuellement espacées et se faisant face l'une l'autre ;
des guides de dispositif de déplacement en va-et-vient (1, 1) destinés à supporter de façon coulissante ledit dispositif de déplacement en va-et-vient (2) suivant la direction de son déplacement en va-et-vient ; et
un pignon (4) disposé à rotation entre lesdites deux crémaillères (3, 3) et comportant des dents de pignon (41) le long d'une partie de sa circonférence, ledit pignon (4) et lesdites dents de pignon (41) étant conçus pour s'engrener en alternance avec l'une et l'autre desdites crémaillères (3, 3) de telle sorte que ledit pignon (4) termine sensiblement une demi-rotation autour de son axe de rotation pour chaque course dudit dispositif de déplacement en va-et-vient (2), caractérisé en ce que ledit dispositif de déplacement en va-et-vient (2) est conformé pour définir une course en va-et-vient linéaire ou une course en va-et-vient incurvée et en ce qu'est prévu un moyen d'accélération/décélération pour accélérer et décélérer le dispositif de déplacement en va-et-vient (2) au niveau d'un point mort supérieur ou inférieur du déplacement en va-et-vient du dispositif de déplacement en va-et-vient (2) ou au voisinage de celui-ci, ledit moyen d'accélération/décélération comprenant un élément coulissant (72) disposé sur le dispositif de déplacement en va-et-vient (2) et comportant une face coulissante (72a) qui entre en contact avec une face coulissante de came (71) lorsque le dispositif de déplacement en va-et-vient (2) est au point mort du déplacement en va-et-vient ou à proximité de celui-ci de telle sorte que l'intersection d'une ligne rectiligne tracée depuis un axe du pignon (4) et perpendiculaire au déplacement en va-et-vient des crémaillères (3, 3) et d'une ligne normale commune passant par un point de contact entre ladite face coulissante de came (71) et ladite face coulissante (72a) dudit élément coulissant (72) se déplace progressivement et sans à-coups le long de la ligne rectiligne lorsque le pignon (4) tourne.

3. Mécanisme de conversion de mouvement selon la revendication 2, dans lequel ledit moyen d'accélération/décélération comprend au moins l'une desdites crémaillères (3, 3) qui comporte des dents d'accélération/décélération (31c, 31b) conçues pour coopérer avec des dents d'accélération/décélération (41 c/41 b) prévues sur ledit pignon (4) de telle sorte que l'intersection d'une ligne rectiligne tracée depuis l'axe du pignon (4) et perpendiculaire à un déplacement en va-et-vient des crémaillères (3, 3) et d'une ligne normale au point de contact entre la face d'une dite dent d'accélération/décélération (31c/31b) de la crémaillère (3, 3) et passant par ce point et la face de la dent d'accélération/décélération correspondante (41c/41b) du pignon (4) se déplace progressivement et sans à-coups le long de la ligne rectiligne lorsque le pignon (4) tourne.

4. Mécanisme de conversion de mouvement selon l'une quelconque des revendications précédentes, dans lequel est prévu un moyen d'inhibition de violence, pour empêcher que le dispositif de déplacement en va-et-vient (2) et le pignon (4) ne dévient d'un fonctionnement normal au voisinage desdits points morts supérieur et inférieur dudit dispositif de déplacement en va-et-vient (2), comprenant un pont (39) s'étendant depuis un côté interne dudit dispositif de déplacement en va-et-vient (2) jusqu'à un autre côté interne ; un premier galet d'inhibition de violence (38) disposé sur l'un ou l'autre côté dudit pont (39) et dudit pignon (4) ; et une came d'inhibition de violence (47) disposée sur un autre côté respectif dudit pont (39) et dudit pignon (4) et comportant une face d'inhibition de violence (48) qui roule sur ledit galet d'inhibition de violence (38) lorsque ledit pignon (4) est mis en rotation.

5. Mécanisme de conversion de mouvement selon la revendication 4, dans lequel ledit premier galet d'inhibition de violence (38) est disposé sur ledit pont (39) et ladite came d'inhibition de violence (47) est disposée sur ledit pignon (4).

6. Mécanisme de conversion de mouvement selon la revendication 4, dans lequel ledit premier galet d'inhibition de violence (38) est disposé sur le pignon (4) et ladite came d'inhibition de violence (47) est disposée sur ledit pont (39).

7. Mécanisme de conversion de mouvement selon la revendication 5, incluant un second galet d'inhibition de violence disposé sur ledit pont (39), ladite came d'inhibition de violence (47) entrant en contact avec l'un desdits galets d'inhibition de violence lorsque ledit dispositif de déplacement en va-et-vient (2) est à un premier point mort dudit déplacement en va-et-vient et entrant en contact avec l'autre galet d'inhibition de violence lorsque ledit dispositif de déplacement en va-et-vient (2) est à un second point mort dudit déplacement en va-et-vient.

8. Mécanisme de conversion de mouvement selon l'une quelconque des revendications précédentes, dans lequel est prévue une dent étagée (46, 36) disposée sur ledit pignon (4) et sur au moins l'une desdites crémaillères (3, 3) pour favoriser l'amorçage d'un engrenage entre lesdites dents de pignon (41) et lesdites dents (31) disposées sur lesdites crémaillères (3, 3).

9. Mécanisme de conversion de mouvement permettant d'effectuer une conversion entre un mouvement de rotation et un mouvement en va-et-vient, comprenant un dispositif de déplacement en va-et-vient incurvé (2) comportant deux crémaillères incurvées (3, 3) mutuellement espacées de manière à se faire face l'une l'autre ; des guides (1, 1) pour supporter ledit dispositif de déplacement (2) lors de son déplacement en va-et-vient le long d'un chemin incurvé ; et un pignon (4) disposé entre lesdites crémaillères (3, 3) dudit dispositif de déplacement en va-et-vient (2) comportant des dents de pignon (41) le long d'une partie d'une circonférence, lesdites dents de pignon (41) s'engrenant en alternance avec lesdites crémaillères (3, 3), ledit pignon (4) tournant autour d'un axe en réponse à un déplacement en va-et-vient dudit dispositif de déplacement en va-et-vient (2).

10. Moteur à combustion interne à déplacement en va-et-vient comprenant :
un piston à déplacement en va-et-vient (9) ;
un arbre tournant (49) ; et
un mécanisme de conversion de mouvement selon l'une quelconque des revendications précédentes, pour convertir le mouvement en va-et-vient du piston en rotation de l'arbre.

11. Moteur à combustion interne à déplacement en va-et-vient selon la revendication 10, dans lequel ledit moteur à combustion interne à déplacement en va-et-vient comprend : un carter comportant une pluralité de chambres de travail ; une roue de base de pistons (17) disposée sur ledit carter et comportant une pluralité de pistons (12) faisant saillie depuis elle-même, chacun desdits pistons (12) s'étendant à l'intérieur d'une desdites chambres de travail ; et un évidement formé dans ledit carter et comportant une surface interne qui est telle que ledit dispositif de déplacement en va-et-vient (2) est supporté par ladite surface interne dudit évidement pendant un déplacement en va-et-vient.
